# EUROPEAN PATENT APPLICATION

(11) **EP 2 945 441 A1**
(43) Date of publication of application: **18.11.2015**
(21) Application number: 14305704.0
(22) Date of filing: 14.05.2014
(51) Int. Cl.: H04W 52/42, H04W 64/00, H04W 8/08, H04W 8/02, H04W 88/08, H04W 74/00, H04W 74/08, H04W 72/04, H04L 12/24, H04L 12/26, H04L 29/08, H04B 1/38, H04B 7/02, H04B 7/04, H04B 7/06, H04W 84/18

(54) **Apparatuses, methods and computer programs for a base station transceiver and for a fixed machine device transceiver of a mobile communication system**

(71) Applicant: ALCATEL LUCENT, 92100 Boulogne-Billancourt (FR)
(72) Inventor: Saur, Stephan, 70435 Stuttgart (DE)
(74) Representative: 2SPL Patentanwälte PartG mbB

(57) **Abstract**

Embodiments provide apparatuses, methods and computer programs for a base station transceiver and for a fixed machine device transceiver of a mobile communication system. The apparatus 10 for the base station transceiver 100 of the mobile communication system 300 comprises a transceiver module 12 operable to communicate with a fixed machine device transceiver 200 using one or more transmission parameters. The apparatus further comprises a control module 14 operable to store information related to the fixed machine device transceiver 200. The information comprises information related to an identification of the fixed machine device transceiver 200 and information related to one or more transmission parameters.

## Description

Embodiments described in the following relate to apparatuses, methods and computer programs for a base station transceiver and for a fixed machine device transceiver of a mobile communication system.

### Background

This section introduces aspects that may be helpful in facilitating a better understanding of the invention(s). Accordingly, the statements of this section are to be read in this light and are not to be understood as admissions about what is in the prior art or what is not in the prior art.

Machine-to-Machine communication (M2M) is an umbrella term for many different use cases. An important use case category is characterized by devices that are installed at a fixed position. Some examples among others for such deployments may be forest fire detection, toxic gas detection, instability detection of big infrastructure buildings like bridges or tunnels, detection of natural disasters like earthquakes. The task of the devices is to monitor a predefined parameter (for example oxygen content in the air) and to send an alarm in the case that an unusual value is measured, or just to report measurements upon request, e.g. once per hour. Such fixed machine devices may however rely on the lifetime of their battery. In other words, once they are installed and activated, they may operate completely autonomous in some cases, and a replacement of the battery may not take place for practical or cost reasons.

### Summary

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Embodiments relate to apparatuses, methods and computer programs for a base station transceiver and for a fixed machine device transceiver of a mobile communication system. Thus, embodiments may improve a concept for data traffic reduction and efficiency in a machine-to-machine communication application involving a fixed machine device transceiver.

According to a first aspect embodiments relate to an apparatus for a base station transceiver of a mobile communication system. The apparatus comprises a transceiver module operable to communicate with a fixed machine device transceiver using one or more transmission parameters. The apparatus further comprises a control module operable to store information related to the fixed machine device transceiver. The information comprises information related to an identification of the fixed machine device transceiver and information related to one or more transmission parameters. This may reduce data traffic or control signaling at connection setup and, in consequence increase a signal-to-noise ratio by avoiding unnecessary communication, or it may help to increase a lifetime of an energy source of a fixed machine device transceiver.

In some embodiments the information related to the fixed machine device transceiver comprises information related to a location of the fixed machine device transceiver. A repeated transmission of the information related to a location of the fixed machine device transceiver may thus be avoided as soon as the fixed machine device transceiver is identified.

In some embodiments the information related to the location of the fixed machine device transceiver comprises a spatial coordinate. Additionally or alternatively, the information related to the identification of the fixed machine device transceiver is biunique for the fixed machine device transceiver. This may simplify a process in which a fixed machine device transceiver needs to be localized within a limited time span or at a high accuracy.

In some embodiments the control module is operable to receive a fixed machine device signal using the transceiver module from the fixed machine device transceiver. The fixed machine device signal comprises the information related to the identification of the fixed machine device transceiver and the information related to the location of the fixed machine device transceiver. This may present a possibility to make the information related to the identification or location of the fixed machine device transceiver available for storage at the control module.

In some embodiments the control module is operable to receive a fixed machine device signal using the transceiver module. The fixed machine device signal comprises information related to the identification of the fixed machine device transceiver. The control module is operable to obtain the information related to the location of the fixed machine device transceiver from a user of the fixed machine device transceiver. This may present an alternative or additional possibility to make the information related to the identification or location of the fixed machine device transceiver available for storage at the control module.

In some embodiments the control module is further operable to communicate a request signal to the fixed machine device transceiver using the transceiver module and the one or more transmission parameters. Additionally or alternatively, the one or more transmission parameters comprise at least one of a beamforming weight, a modulation scheme or a coding scheme. Additionally or alternatively, the information related to the identification corresponds to an identification in a random access preamble. This way, signaling overhead may be reduced, possibly leading to lower signaling traffic or energy savings.

In some embodiments the control module is operable to receive a fixed machine device signal from the fixed machine device transceiver using the transceiver module. The control module is further operable to receive information related to the fixed machine device signal from another base station transceiver. The control module is further operable to combine the fixed machine device signal and the information related to the fixed machine device signal to obtain an improved fixed machine device signal. It may thus be possible to significantly improve a signal-to-noise ratio while avoiding retransmission of the fixed machine device signal.

In some embodiments the control module is operable to read out the information related to the fixed machine device transceiver from a data storage module. The control module is also operable to transmit a request signal to the fixed machine device transceiver using the transceiver module and using the information related to the one or more transmission parameters. The control module is further operable to receive a fixed machine device signal from the fixed machine device transceiver. The information related to the fixed machine device transceiver comprises an identification tag assigned to the fixed machine device transceiver and a spatial coordinate of the fixed machine device transceiver. Moreover, the control module is operable to locate the fixed machine device transceiver based on the spatial coordinate. This may, in some applications where a fixed machine device transceiver is stationary, offer a possibility to exploit the stationary nature of the fixed machine device transceiver by re-using time-invariant parameters of the fixed machine device transceiver.

According to a further aspect embodiments relate to an apparatus for a fixed machine device transceiver of a mobile communication system. The apparatus comprises a transceiver module operable to communicate with a base station transceiver using one or more transmission parameters. The apparatus also comprises a control module operable to store information related to the one or more transmission parameters, and transmit a random access message to the base station transceiver using the transceiver module and the information related to the transmission parameters. Control traffic or signaling overhead may thus be reduced in both directions of communication, and initial signal quality may be improved or the lifetime of energy sources may be increased.

In some embodiments the information related to the one or more transmission parameters comprises a beamforming parameter, a diversity combining parameter, or an amplification factor. Additionally or alternatively, the random access message comprises information related to an identification of the fixed machine device transceiver as a fixed machine device transceiver. This way an application for several transceiver patterns or antenna patterns may be enabled.

In some embodiments the fixed machine device signal further comprises information related to a location of the fixed machine device transceiver. Additionally or alternatively, the information related to the identification of the fixed machine device transceiver is biunique. This may avoid ambiguities, limit a chance of addressing multiple fixed machine device transceivers or errors in a localization of a fixed machine device transceiver.

In some embodiments the control module is further operable to measure a physical quantity and to transmit the fixed machine device signal to the base station transceiver using the transceiver module if the physical quantity exceeds a predefined threshold. Additionally or alternatively, the random access message comprises information related to the physical quantity. This may allow implementations in safety-relevant environments, such as fire detectors, and efficient payload data transmission.

According to a further embodiment it is provided a method for a base station transceiver of a mobile communication system. The method comprises communicating with a fixed machine device transceiver using one or more transmission parameters. The method further comprises storing of information related to the fixed machine device transceiver. The information comprises information related to an identification of the fixed machine device transceiver and information related to the one or more transmission parameters. This may reduce control traffic exploiting the stationary nature of the fixed machine device transceiver and re-using time-invariant fixed machine device transceiver data or transmission parameters.

According to yet a further embodiment it is provided a method for a fixed machine device transceiver of a mobile communication system. The method comprises communicating with a base station transceiver using one or more transmission parameters. The method further comprises storing of information related to the one or more transmission parameters. The method also comprises transmitting of a random access message to the base station transceiver using the information related to the transmission parameters. This may enable more efficient transmission as time-invariant transmission parameters may be considered at connection setup, e.g. controlled steering of a signal beam into a desired direction, which may further reduce control traffic.

Some embodiments comprise a computer readable storage medium storing instructions which, when executed by a computer, cause the computer to implement one of the methods described herein, or a digital control circuit installed within the apparatus for performing one of the methods. Such a digital control circuit, e.g. a digital signal processor (DSP), needs to be programmed accordingly. Hence, yet further embodiments also to a computer program or a computer program product having a program code for performing one of said methods, when the computer program or computer program product is executed on a computer, processor, or programmable hardware component.

### Brief description of the Figures

Some embodiments of apparatuses and/or methods will be described in the following by way of example only, and with reference to the accompanying figures, in which
- Fig. 1: shows a block diagram of an embodiment of an apparatus for a base station transceiver and an embodiment of an apparatus for a fixed machine device transceiver of a mobile communication system;
- Fig. 2: shows a comparison of time and frequency resource usage of LTE broadband and M2M applications in an embodiment;
- Fig. 3: shows an illustration of a per-user downtilt adaptation according to an embodiment;
- Fig. 4: shows an illustration of a grid of several fixed beams covering a cell in an embodiment;
- Fig. 5: shows a power in dB of one fixed beam over a broadcast pattern;
- Fig. 6: shows a flow chart of a method for a base station transceiver of a mobile communication system according to an embodiment; and
- Fig. 7: shows a flow chart of a method for a fixed machine device transceiver of a mobile communication system according to an embodiment.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Cellular network operators consider M2M communications as an increasing revenue stream. It may hence be desirable to integrate M2M services as described above in cellular mobile radio systems like Global System for Mobile Communications (GSM), Universal Mobile Telecommunications System (UMTS) or Long Term Evolution (LTE). Therefore it may be helpful to minimize the energy consumption at the machine device, or, in other words, to reduce the number of bits that a fixed machine device has to transmit or receive as much as possible and to avoid retransmissions.

One technical problem may be the selection of appropriate radio link parameters, or, in other words, to decide which modulation scheme (in LTE Quadrature Phase-Shift Keying (QPSK), 16-Quadrature Amplitude Modulation (QAM), or 64-QAM) or which coding rate shall be utilized to serve a particular machine device. In contrast to classical traffic types in cellular mobile radio systems like voice or file transfer, many M2M applications may be characterized by sporadic and very short messages. In one extreme case for example only one 100-bit-message per day is transmitted. Therefore it may not be possible to adapt the link parameters dynamically during the transmission time. A too optimistic choice (high order modulation scheme, little redundancy) may lead to a high retransmission rate, whereas a too pessimistic choice (low order modulation scheme, much redundancy) may occupy many radio resources leading to an overall low spectral efficiency of the cellular mobile radio system.

Also the selection of appropriate transmit-and-receive beamforming weights at a base station, possibly in both horizontal and vertical direction, may be a crucial issue. The base station may select the beamforming weights based on feedback from the device or based on an evaluation of the received uplink signal. The first solution may be problematic because it requires additional computations and transmissions at the device, and the second one may come along with an immense additional overhead at the base station assuming that the number of machine devices is one or two orders of magnitude higher than the number of classical cellular mobile users.

In a conventional deployment with multiple machine devices several steps are executed repeatedly for each single transmission (assuming communication is initiated by the device) for all devices. These steps comprise a random access procedure for the establishment of a connection to the network and for synchronization, a request for and grant of radio resources, a transmission of the message comprising a fixed machine device identification, the actual message of the device and possibly of the location of the device (e.g. Global Positioning System (GPS) coordinates), and a selection of link parameters at the base station according to signaling exchange between base station and device and according to evaluation of uplink signals at the base station. However, the fact whether or not a device is fixed is not regarded and therefore not exploited.

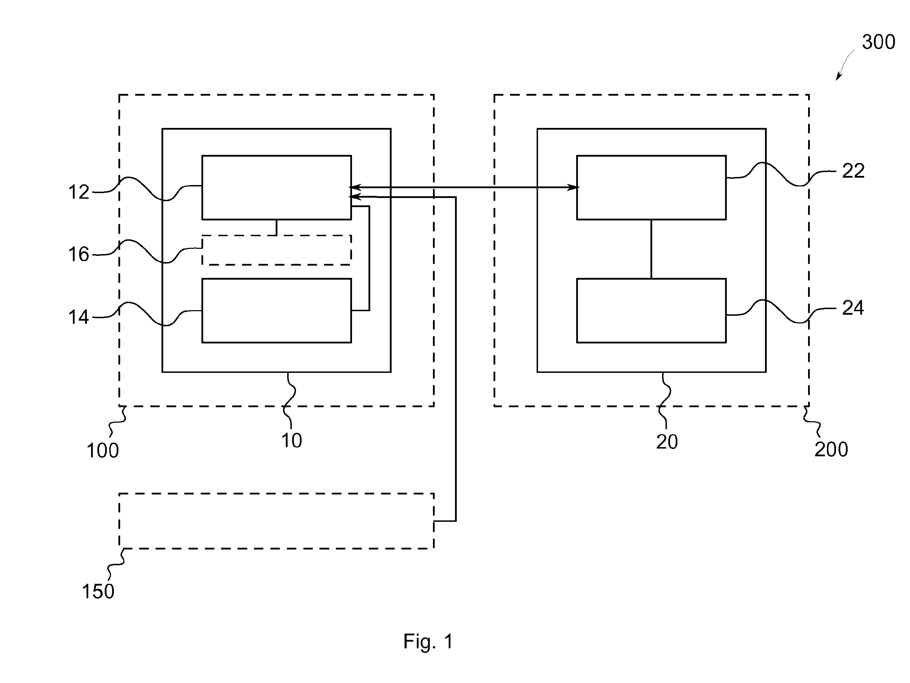

In the following, optional components are depicted in dashed lines. Fig. 1 illustrates a block diagram of an embodiment of an apparatus 10 for a base station transceiver 100 of a mobile communication system 300. Apparatus 10 comprises a transceiver module 12 operable to communicate with a fixed machine device transceiver 200 using one or more transmission parameters. Apparatus 10 further comprises a control module 14 operable to store information related to fixed machine device transceiver 200. The information comprises information related to an identification of fixed machine device transceiver 200 and information related to one or more transmission parameters. Control module 14 is further connected to transceiver module 12.

A fixed machine device may resemble for example a stationary sensor or an actuator. In embodiments, control module 14 may be implemented using one or more processing units, one or more processing devices, any means for processing, such as a processor, a computer or a programmable hardware component being operable with accordingly adapted software. In other words, the described functions of control module 14 may as well be implemented in software, which is then executed on one or more programmable hardware components. Such hardware components may comprise a general purpose processor, a Digital Signal Processor (DSP), a micro-controller, etc.

Control module 14 may comprise an internal storage medium or memory, or an external data storage module 16. Data storage module 16 may comprise e.g. digital memories, magnetic storage media such as magnetic disks and magnetic tapes, hard drives, or optically readable digital data storage media.

Transceiver module 12 may be implemented as one or more receiver/transmitter/transceiver devices, one or more receiver/transmitter/transceiver units, any means for receiving/transmitting/transceiving, i.e. receiving and/or transmitting etc. A receiver/transmitter/transceiver or receiver/transmitter/transceiver module 12 may be any means for transceiving, i.e. receiving and/or transmitting etc., and it may comprise typical receiver and transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. The information related to an identification of fixed machine device transceiver 200 is abbreviated as "ID" in the following, and may comprise for example a number, a code or a signal form.

Likewise, an apparatus 20 for a fixed machine device transceiver 200 of mobile communication system 300 is depicted in Fig. 1. Apparatus 20 comprises a transceiver module 22 operable to communicate with base station transceiver 100 using the one or more transmission parameters. Apparatus 20 also comprises a control module 24 operable to store information related to the one or more transmission parameters, and transmit a random access message to base station transceiver 100 using transceiver module 22 and the information related to the transmission parameters. Control module 24 is further connected to transceiver module 22. Transceiver module 22 may be implemented analogous to transceiver module 12. Likewise, control module 24 may be implemented analogous to control module 14.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) - stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

It may thus become possible to store information about one or more fixed machine devices at a base station. A fixed machine device may comprise apparatus 20 or represent fixed machine device transceiver 200. The base station may comprise apparatus 10 or represent base station transceiver 100. In some exemplary embodiments the stored information related to fixed machine device transceiver 200 may comprise an identifier of a machine device or fixed machine device transceiver 200, information related to its location (e.g. GPS coordinates or spatial coordinates), advantageous beamforming weights or downtilt, or an advantageous modulation and coding scheme. This type of information may be characterized by the property that it does not change over time. In some further embodiments a long-term change of some of these parameters may be possible. Once the parameters are available they are stored by control module 14, for example in a data base or a look-up table, at base station transceiver 100. They may then be applied without a need of regular signaling exchange with fixed machine device transceiver 200 or complex evaluation at connection setup. In embodiments where a slow change of parameters may take place, the parameters may be updated in predefined or chosen time intervals. There may be multiple base station transceivers 100 providing coverage for fixed machine device transceiver 200. Base stations 100 providing coverage for the fixed machine device or fixed machine device transceiver 200 are aware of fixed machine device transceiver 200 and store base-station individual information in their look-up tables.

The availability of the information may in some cases improve a radio link quality in M2M communications, or reduce a signal overhead. Appropriate parameter settings may be read from the look-up table, and multiple retransmissions due to unsuitable transmission parameters may possibly be avoided. Furthermore, energy savings in the fixed machine device transceiver 200 may be increased, or a load on control channels may be reduced.

In the following it is described an exemplary embodiment of apparatus 10 for base station transceiver 100 and apparatus 20 for fixed machine device transceiver 200 together with multiple functional steps that are executable within mobile communication system 300 comprising apparatuses 10 and 20.

Firstly, a registration process and a collecting of information in a look-up table are performed in the embodiment. A new fixed machine device transceiver 200 may not be known initially in the network. Some embodiments may enable a procedure of registration for this device in the look-up table. Information that shall be stored in the look-up table may be distinguished into at least two different types.

A first type comprises information that mobile communication system 300 (in the following also referred to as the network 300) cannot determine by itself and may thus be provided externally. This first type comprises the information related to the ID of fixed machine device transceiver 200 and the information related to the exact location of fixed machine device transceiver 200.

In some embodiments control module 14 is operable to receive a fixed machine device signal using transceiver module 12 from fixed machine device transceiver 200. The fixed machine device signal comprises the information related to the ID of fixed machine device transceiver 200 and the information related to the location of fixed machine device transceiver 200. In some further embodiments the fixed machine device signal comprises information related to the identification of fixed machine device transceiver 200, and control module 14 is operable to obtain the information related to the location of fixed machine device transceiver 200 from a user of fixed machine device transceiver 200. That is to say, the first information type may be transmitted by fixed machine device transceiver 200 itself after it has established a regular network connection. Alternatively, this information may also come from a service or application provider that may register a multitude of new fixed machine device transceivers 200.

The fixed machine device signal may be transmitted as a random access message. The random access message comprises information related to an identification of fixed machine device transceiver 200 as a fixed machine device transceiver 200 in one embodiment. The multitude of fixed machine device transceivers 200 may then be marked as "fixed devices". Thus, mobile communication system 300 may be aware of this special property and the property may be further exploited. After this registration process a new entry for fixed machine device transceiver 200 in the look-up table may be made available.

A second type comprises information that only the network 300 may determine. Once fixed machine device transceiver 200 is registered as a "fixed device" in network 300, and the first-type information is stored in the look-up table, network 300 may complete the entries in the look-up table with appropriate beamforming weights (for example in case of 3D-beamforming vertical and horizontal weights), as well as the appropriate modulation and coding scheme successively. In an embodiment the information related to the one or more transmission parameters comprises a beamforming parameter, a diversity combining parameter (such as a maximum ratio combining parameter or a selection combining parameter), or an amplification factor. In some cases the second-type information may change on a long-term time basis, for instance with changing traffic load over the day, or with a changing environment (e.g. shadowing due to a parking truck nearby). The stored information may hence be updated from time to time.

In a subsequent step, stored link parameters may be applied if communication is initiated by network 300. A possible scenario where communication between the base station and the fixed machine device is initiated by the network may be if a M2M server or an application server requests new data reporting from multiple fixed machine device transceivers 200, for example temperature measurements. In some embodiments control module 14 is further operable to communicate a request signal to fixed machine device transceiver 200 using transceiver module 12 and the one or more transmission parameters. In addition or alternatively, the one or more transmission parameters comprise at least one of a beamforming weight, a modulation scheme or a coding scheme. As network 300 is aware of the addressed machine devices, base station 100 may in other words read appropriate link parameters from the look-up table. More specifically, base station 100 applies the stored horizontal and/or vertical beamforming weights and the stored modulation and coding scheme.

In an alternative or additional step, stored link parameters may be applied if communication is initiated by fixed machine device transceiver 200.

If the communication between base station 100 and fixed machine device transceiver 200 is initiated by fixed machine device transceiver 200, for example if an alarm message has to be transmitted, the base station may identify fixed machine device transceiver 200 before the stored link parameters are applied. For example, in some embodiments, control module 24 is operable to measure a physical quantity and to transmit the fixed machine device signal to base station 100 using transceiver module 22 if the physical quantity exceeds a predefined threshold. The physical quantity may for example comprise a temperature, a concentration of particles in a gas or liquid or a force. In further embodiments the random access message comprises information related to the physical quantity.

In one embodiment the information related to the identification of fixed machine device transceiver 200 is biunique for fixed machine device transceiver 200. A biunique assignment, also called a bijection, is a function between the elements of two sets, where every element of one set is paired with exactly one element of the other set, and every element of the other set is paired with exactly one element of the first set. Fixed random access preambles that are assigned biunique to one particular machine device may for example be used, or, in other words, the information related to the identification corresponds to an identification in a random access preamble. Once a correlation receiver in the base station detects a particular random access preamble it may identify fixed machine device transceiver 200 and apply the stored link parameters in one embodiment. In other words, control module 14 is operable to read out the information related to fixed machine device transceiver 200 from an optional data storage module 16 (see Fig. 1). Data storage module 16 may be implemented externally to control module 14. Alternatively, control module 14 may comprise an internal storage device corresponding to data storage module 16 in its functionality. Control module 14 is also operable to transmit a request signal to fixed machine device transceiver 200 using transceiver module 12 and using the information related to the one or more transmission parameters. Control module 14 is further operable to receive a fixed machine device signal from fixed machine device transceiver 200. The information related to fixed machine device transceiver 200 comprises an identification tag assigned to fixed machine device transceiver 200 and a spatial coordinate of fixed machine device transceiver 200. Moreover, control module 14 is operable to locate fixed machine device transceiver 200 based on the spatial coordinate.

A localization of an event may take place in another step. If fixed machine device transceiver 200 detects an event, for example a forest fire, a transmission only of its ID takes place in one embodiment. Fixed machine device transceiver 200 may thereby be comprised by a sensor. In other embodiments, fixed machine device transceiver 200 may be comprised by an actuator, for example when applied to a fire extinguishing system, sprinkler system, irrigation system, a network of power stations, etc. Network 300 may receive an alarm message from fixed machine device transceiver 200 with a predetermined ID and may determine the location of the event in the look-up table. An optional function implemented in network 300 may notify public authorities or a nearby fire service automatically. In other words, apparatus 10 may for example comprise a transmitter operable to provide a distress signal or alarm signal if a fixed machine device signal comprising the fixed machine device ID from fixed machine device transceiver 200 is received by transceiver module 12. The distress signal may comprise information from the look-up table comprising an information about the location of fixed machine device transceiver 200. It may thus be possible to immediately localize an event, e.g. a forest fire or a gas attack. In an embodiment base station 100 receives an alarm message from a fixed fixed machine device transceiver 200, whose ID and location parameters are registered in the look-up table. The location of the event may then be known without an explicit transmission of location information. This may save energy in the fixed machine device transceiver 200 and extend its lifetime. The reliability of the alarm may be further verified if alarm messages from neighboring fixed fixed machine device transceivers 200 are detected.

In an additional step a joint detection of M2M signals may be performed. Cooperative multipoint systems or macrodiversity may be utilized. This may in some cases extend coverage or reduce transmit power. In some embodiments, more than just one base station 100 is located within the coverage area of one fixed machine device transceiver 200. Fig. 1 shows another base station transceiver 150 connected to base station transceiver 100. Fixed machine device transceiver 200 may be registered at more than one base station that can receive signals from fixed machine device transceiver 200, such as base station 100 and the other base station 150. Vice versa, each base station 100; 150 has a different look-up table with individual entries for the link parameters of a multitude of fixed machine device transceivers 200. If fixed machine device transceiver 200 sends the biunique random access preamble or a different message format to identify itself, this signal may be received by several base stations 100; 150 in the neighborhood. These signals may then be combined in network 300, which may possibly improve the link budget. That is to say, the coverage area of fixed machine device transceiver 200 may be extended, or alternatively, the transmit power at fixed machine device transceiver 200 may be reduced. In other words, control module 14 is operable to receive a fixed machine device signal from fixed machine device transceiver 200 using the transceiver module 12. Control module 14 is further operable to receive information related to the fixed machine device signal from another base station transceiver 150. Control module 14 is further operable to combine the fixed machine device signal and the information related to the fixed machine device signal to obtain an improved fixed machine device signal. For example, maximum ratio combining or selection combining may be used in embodiments.

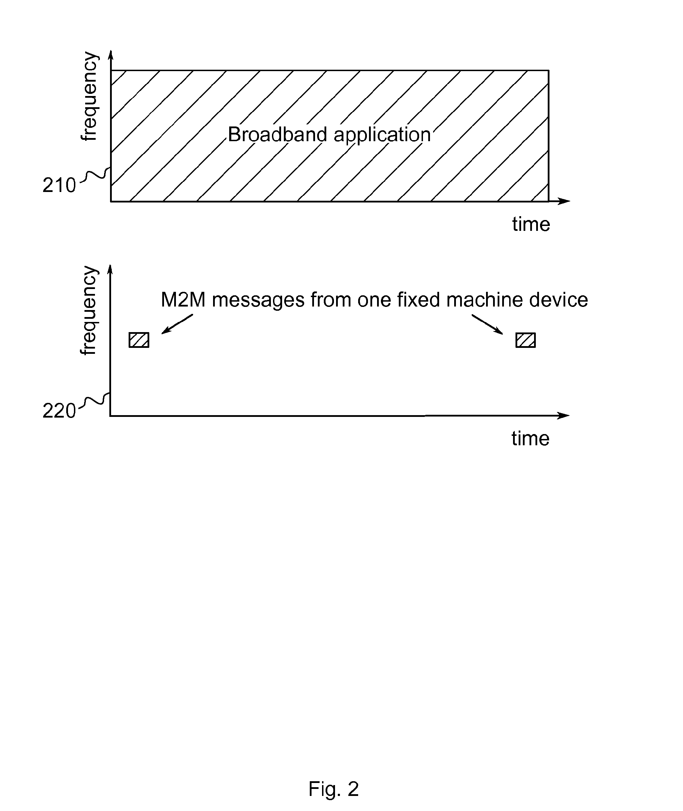

Turning now to Figs. 2 to 5, it is explained in more detail how transmission parameters may be implemented in some embodiments. Exemplary choices of individual transmission parameters may lead to a link optimization compared to conventional solutions.

Fig. 2 shows two diagrams displaying frequency against time. Intervals in frequency and in time that transmissions may assume are indicated as boxes. Fig. 2 illustrates a difference between transmissions of a typical LTE broadband application 210 like file transfer or video streaming and a typical M2M application 220 like remote control of traffic lights. The LTE standard assumes a general case, or mobile devices, and therefore provides manifold means to adapt the link parameters during the transmission. This may happen in closed-loop form, or, in other words through exchange of signaling information, or in open-loop form through measurements. The application of such control loops, however, may require a continuous or quasi-continuous communication between a network and a device. Some M2M applications may exhibit a different traffic characteristic from LTE standard, namely sporadic or very short messages (e.g. one 100 Byte packet per hour). Open-loop control loops for link adaptation may fail because a data volume may be too small for reliable measurements. Closed-loop control loops may fail as well due to the traffic characteristics (rare, sporadic short messages instead of (quasi-)continuous transmissions, see Figure 2). The transmission may be finalized until the closed-loop feedback is available

In the following it is explained in detail how the storage of long-term statistical parameters at the base station according to some embodiments may serve for link optimization for M2M traffic.

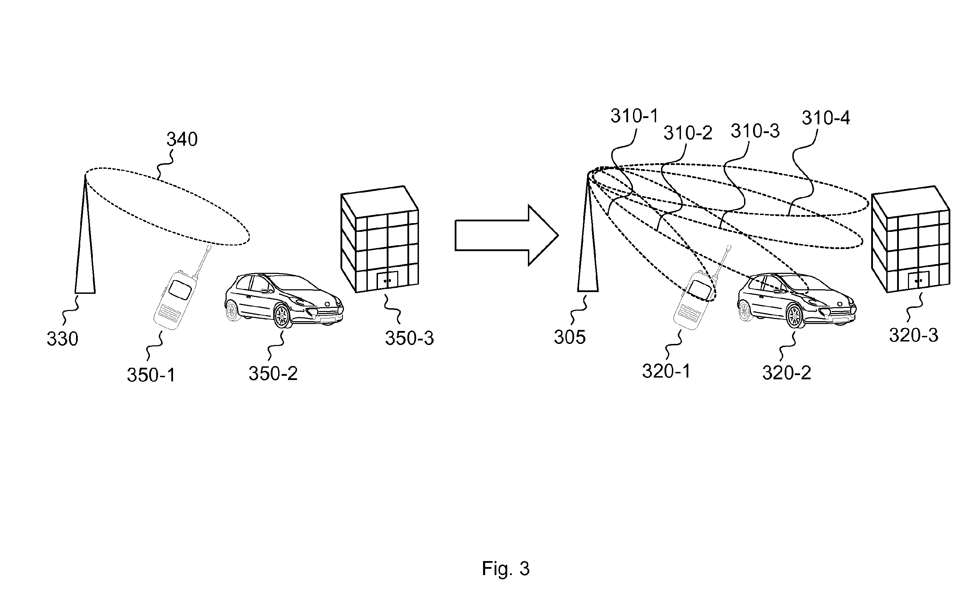

In an embodiment illustrated in Fig. 3, an antenna system 305 is capable to adjust the downtilt on a per-user basis. That is to say, the time-frequency radio resources dedicated to one specific user are sent or received at the base station applying a user-specific electronic downtilt. The vertical beam 310-1; 310-2; 310-3; 310-4 is steered in the direction of the user 320-1; 320-2; 320-3 or, in case of non-line-of-sight (NLOS) propagation conditions, in the direction of the elevation angle of the most dominant propagation path. Transmission parameters may also comprise a beam number in embodiments. The calculation of the direction may be carried out at the base station by evaluating the phase shifts on the received uplink antenna signals. If the received M2M data volume from the machine device is too small, the downtilt estimation may be too noisy, and the principle may fail. For comparison, Fig. 3 also shows a conventional antenna system 330 with inadjustable downtilt, where a beam 340 is not steered in the direction of individual users 320-1; 320-2; 320-3, which may lead to high Signal-to-Noise Ratios (SNR).

This problem may be solved for fixed devices in some embodiments, where an optimum downtilt does not change over time, by storing this long-term property at the base station and to use this stored downtilt instead of a possibly noisy estimate. The stored value may be based on averaging of measurements over a predefined time period. This may be desirable because fixed machine devices might not be able to exploit spatial diversity in some cases, or if they are equipped with only one single antenna, and/or when they exposed to the need of coverage extension (e.g. due to a "bad" location of smart meters in the basement of buildings).

In a further embodiment, another parameter that is stored for fixed machine devices at the base station is the horizontal beam direction. In LTE, there may be no beam shaping taking place, but the optimal horizontal antenna weights may be signaled in form of a so-called Precoding Matrix Indicator (PMI) feedback from the user to the base station. For machine devices this principle may fail for several reasons. One reason may be that some machine devices are power-limited. A replacement of a battery is often not considered because this might lead to additional expenses. The lifetime of the device may thus rely on the lifetime of its battery. Calculation of PMI information may pose an additional computational task consuming energy. A further reason may be PMI feedback from multiple devices being a significant overhead in the system limiting the overall capacity. Furthermore, as mentioned above, the data volume may not be sufficient to calculate reliable estimates of the best suitable PMI. Moreover, the PMI may represent a short-term channel state that may be outdated for a subsequent transmission.

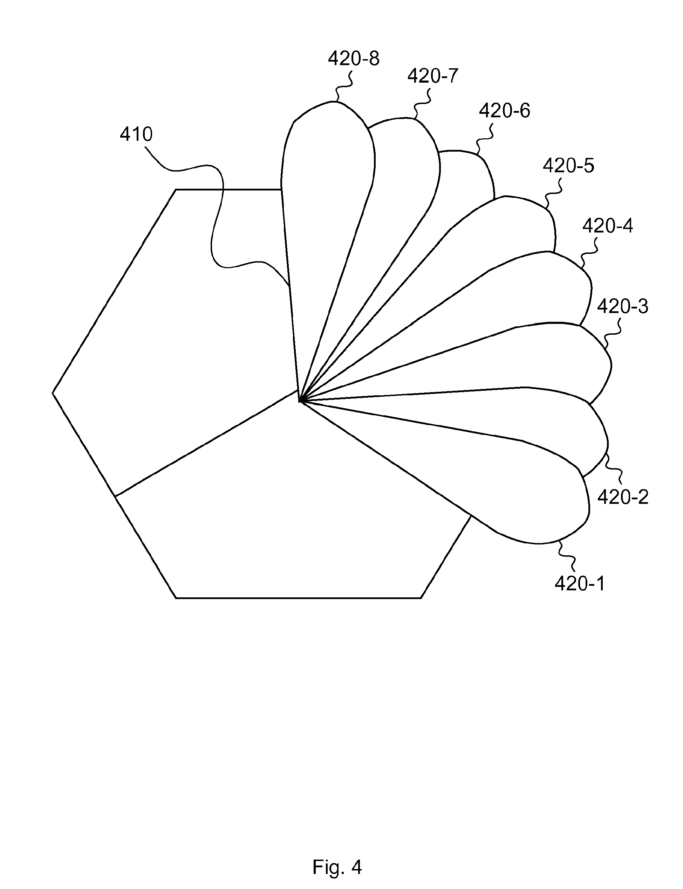

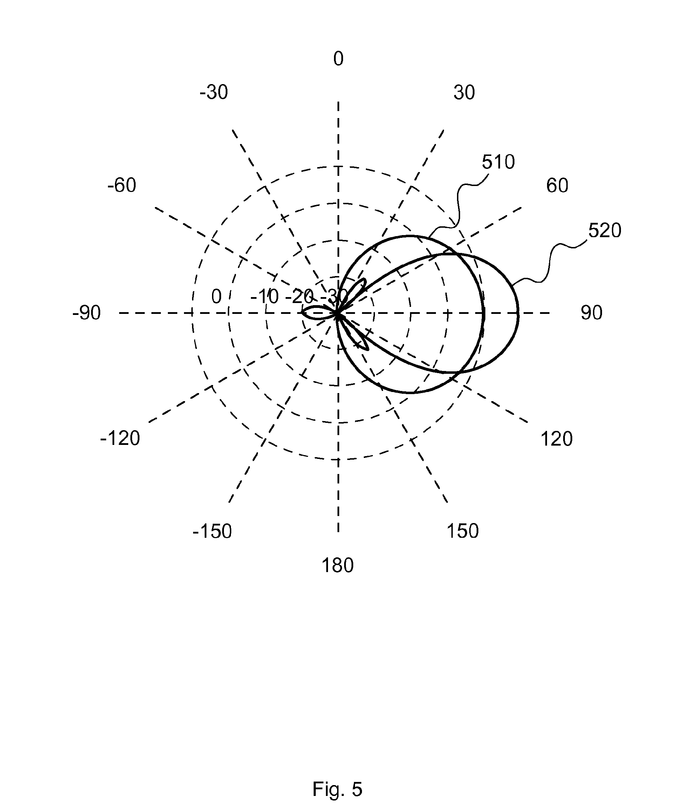

An alternative solution is the so-called broadcast pattern. These antenna weights lead to a beam covering the complete cell more or less equally. It may be utilized for signals addressing all devices in the cell like system information and synchronization. For fixed machine devices, an application of a "geometric" beam direction may be helpful. Assuming a 120° cell 410, which is illustrated in Fig. 4, a possible configuration is that each device is mapped to one of a predefined number (e.g. eight) of fixed beams 420-1 to 420-8, also known as grid of fixed beams. In some embodiments a most suitable beam index is stored at the base station for each registered device in the cell. In comparison to the broadcast pattern the grid of fixed beams may have a higher directivity, or, in other words, a bigger portion of the radiated energy is steered into the direction of the strongest propagation path. Fig. 5 illustrates the improved directivity (power in dB) of one fixed beam 510 (out of the grid of fixed beams in Fig. 4) over the broadcast pattern 520. This may result in an improvement of the link budget. Again, the index of the most suitable fixed beam that is stored as a link parameter (or transmission parameter) at the base station may be determined based on long-term averaging of uplink measurements.

In conventional solutions, M2M devices operating with inadequate link parameters may jeopardize the performance of interference coordination schemes. By implementation of some embodiments it may be possible that optimized vertical (downtilt) and horizontal (grid of fixed beams index) antenna parameters allow for interference coordination schemes that may improve the system performance in terms of spectral efficiency and cell edge user throughput even further. Downtilt or the grid of beam index may be time-invariant.

A continuous adaptation of the modulation scheme through signaling during the transmission may not be desirable for M2M due to the traffic characteristics explained in Fig. 2. An exemplary solution is to apply the lowest modulation scheme (in LTE: QPSK) for all transmissions to M2M devices. This may possibly avoid an inacceptable high retransmission rate. In most cases a channel behavior for fixed devices is characterized such that the channel is frequency selective. This may be a consequence of a delay spread due to multiple propagation paths between transmitter and receiver. On the other hand, the channel may be almost flat in time direction due to a lack of Doppler spread. If a fixed machine device is scheduled on the same frequency resources (in LTE: subcarriers) for all transmissions, it may experience similar channel conditions in terms of a SNR range (considering possible interfering signals or small channel variations).

In some embodiments a suitable modulation scheme (e.g. in LTE: QPSK, 16-QAM, or 64-QAM) for each fixed device per frequency sub-band (e.g. in LTE per physical resource block) is stored in a table at the base station. Any one modulation scheme may correspond to a predetermined SNR range, i.e. QPSK for low SNR, 16-QAM for medium SNR, and 64-QAM for high SNR). Fixed devices within a predefined distance to the base stations may probably fall in the high SNR category, i.e. they will be always served with 64-QAM. This may lead to an improvement of a spectral efficiency of the overall system.

Optionally, a preferred code rate may be stored in the table at the base station in further embodiments. The combination of modulation scheme and code rate may lead to a finer granularity of SNR ranges. By considering the code rate as well, e.g. the following five categories can be used: QPSK rate 1/3, QPSK rate 1/2, 16-QAM rate 1/2, 64-QAM rate 1/2, 64-QAM rate 3/4. Again each category corresponds to a certain SNR range.

In some of the previous embodiments, the selection of an appropriate modulation and coding category for each fixed device is based on long-term statistics, e.g. observation of retransmission rates. Modulation and coding scheme (MCS) may change over time. However a rough categorization in e.g. 3-5 SNR ranges may still be reasonable. Additionally, an offset may be introduced. In other words, the MCS is selected such that it is still sufficient if the actual SNR is e.g. 5dB worse than expected.

Further embodiments relate to other parameters of fixed devices that are stored at the base station. These other parameters may for example comprise parameters describing a typical behavior of a device. As a simple example, machine traffic may be split-up in event-driven traffic (transmissions occur if a predefined condition is fulfilled) and time-driven traffic (transmissions occur in a-priori known time slots). The base station scheduler may use this knowledge for pre-allocation of radio resources for time-driven transmissions. This may help to reduce overhead by avoiding exchange of scheduling information (request and grant of radio resources). The other parameters may also comprise a battery status of a device. In a case where there are several identical devices in the cell for the same purpose (e.g. temperature measurement) the base station may establish a connection to a device with good battery status to request the measurement.

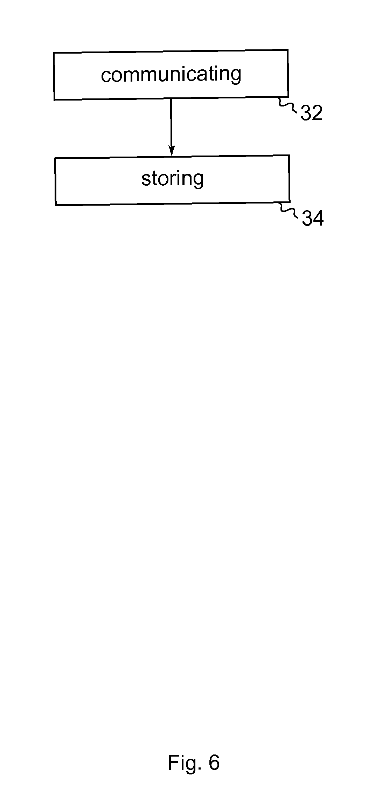

Turning now to Fig. 6, it is shown a flow chart of a method for a base station transceiver of a mobile communication system. The method comprises communicating 32 with a fixed machine device transceiver using one or more transmission parameters. The method further comprises storing 34 of information related to the fixed machine device transceiver. The information comprises information related to an identification of the fixed machine device transceiver and information related to the one or more transmission parameters.

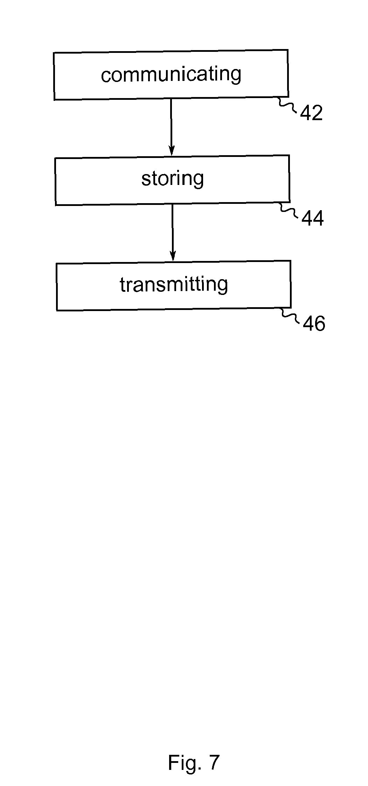

Fig. 7 further shows a flow chart of a method for a fixed machine device transceiver of a mobile communication system. The method comprises communicating 42 with a base station transceiver using one or more transmission parameters. The method further comprises storing 44 of information related to the one or more transmission parameters. The method also comprises transmitting 46 of a random access message to the base station transceiver using the information related to the transmission parameters.

The methods presented in Fig. 6 and 7 may enable an exploitation of knowledge about fixed machine devices in the network. Events may thus be localized more easily and directly in the cellular mobile radio network, and an explicit transmission of location data may no longer be necessary. Appropriate radio link parameters like beamforming weights and modulation and coding scheme are known in advance and applied without exchange of signaling information between machine device and base station. Both advantages aim at energy savings at the machine device.

A further embodiment is a computer readable storage medium storing instructions which, when executed by a computer, cause the computer to implement one of the methods described herein. Other embodiments are a computer program or a computer program product having a program code for performing any one of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "means", "means for transceiving", "means for storing", "means for processing", "means for controlling", etc., may be provided through the use of dedicated hardware, such as "a transceiver", "a memory/storage", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for a base station transceiver (100) of a mobile communication system (300), comprising
a transceiver module (12) operable to communicate with a fixed machine device transceiver (200) using one or more transmission parameters; and
a control module (14) operable to store information related to the fixed machine device transceiver (200), said information comprising information related to an identification of the fixed machine device transceiver (200) and information related to one or more transmission parameters .

2. The apparatus (10) according to claim 1, wherein the information related to the fixed machine device transceiver (200) comprises information related to a location of the fixed machine device transceiver.

3. The apparatus (10) according to claim 2, wherein the information related to the location of the fixed machine device transceiver (200) comprises a spatial coordinate and/or wherein the information related to the identification of the fixed machine device transceiver (200) is biunique for the fixed machine device transceiver (200).

4. The apparatus (10) according to claim 2, wherein the control module (14) is operable to receive a fixed machine device signal using the transceiver module (12) from the fixed machine device transceiver (200), wherein the fixed machine device signal comprises the information related to the identification of the fixed machine device transceiver (200) and the information related to the location of the fixed machine device transceiver (200).

5. The apparatus (10) according to claim 2, wherein the control module (14) is operable to receive a fixed machine device signal using the transceiver module (12), wherein the fixed machine device signal comprises information related to the identification of the fixed machine device transceiver (200), and wherein the control module (14) is operable to obtain the information related to the location of the fixed machine device transceiver (200) from a user of the fixed machine device transceiver (200).

6. The apparatus (10) according to claim 1, wherein the control module (14) is further operable to communicate a request signal to the fixed machine device transceiver (200) using the transceiver module (12) and the one or more transmission parameters, and/or wherein the one or more transmission parameters comprise at least one of a beamforming weight, a modulation scheme or a coding scheme, and/or wherein the information related to the identification corresponds to an identification in a random access preamble.

7. The apparatus (10) according to claim 1, wherein the control module (14) is operable to receive a fixed machine device signal from the fixed machine device transceiver (200) using the transceiver module (12), wherein the control module (14) is further operable to receive information related to the fixed machine device signal from another base station transceiver (150), and wherein the control module (14) is operable to combine the fixed machine device signal and the information related to the fixed machine device signal to obtain an improved fixed machine device signal.

8. The apparatus (10) of claim 1, wherein the control module (14) is operable to:
read out the information related to the fixed machine device transceiver (200) from a data storage module (16),
transmit a request signal to the fixed machine device transceiver (200) using the transceiver module (12) and using the information related to the one or more transmission parameters,
receive a fixed machine device signal from the fixed machine device transceiver (200), wherein the information related to the fixed machine device transceiver (200) comprises an identification tag assigned to the fixed machine device transceiver (200) and a spatial coordinate of the fixed machine device transceiver (200), and
locate the fixed machine device transceiver (200) based on the spatial coordinate.

9. An apparatus (20) for a fixed machine device transceiver (200) of a mobile communication system (300), comprising
a transceiver module (22) operable to communicate with a base station transceiver (100) using one or more transmission parameters; and
a control module (24) operable to
store information related to the one or more transmission parameters, and transmit a random access message to the base station transceiver (100) using the transceiver module (22) and the information related to the transmission parameters.

10. The apparatus (20) according to claim 9, wherein the information related to the one or more transmission parameters comprises a beamforming parameter, a diversity combining parameter, or an amplification factor, and/or wherein the random access message comprises information related to an identification of the fixed machine device transceiver (200) as a fixed machine device transceiver (200).

11. The apparatus (20) according to claim 9, wherein the fixed machine device signal further comprises information related to a location of the fixed machine device transceiver (200) and/or wherein the information related to the identification of the fixed machine device transceiver (200) is biunique.

12. The apparatus (20) according to claim 9, wherein the control module (24) is further operable to measure a physical quantity and to transmit the fixed machine device signal to the base station transceiver (100) using the transceiver module (22) if the physical quantity exceeds a predefined threshold, and/or wherein the random access message comprises information related to the physical quantity.

13. A method for a base station transceiver (100) of a mobile communication system (300), said method comprising:
communicating (32) with a fixed machine device transceiver (200) using one or more transmission parameters; and
storing (34) information related to the fixed machine device transceiver (200), said information comprising information related to an identification of the fixed machine device transceiver (200) and information related to the one or more transmission parameters.

14. A method for a fixed machine device transceiver (200) of a mobile communication system (300), said method comprising:
communicating (42) with a base station transceiver (100) using one or more transmission parameters;
storing (44) information related to the one or more transmission parameters; and
transmitting (46) a random access message to the base station transceiver (100) using the information related to the transmission parameters.

15. A computer program having a program code for performing the method of one of claims 13 or 14, when the computer program is executed on a computer, processor, or a programmable hardware component.

## Amended claims

### Amended claims in accordance with Rule 137(2) EPC.

1. An apparatus (10) for a base station transceiver (100) communicating with an Machine-to-Machine, M2M, fixed machine device transceiver (200) in a mobile communication system (300), comprising
a transceiver module (12) operable to communicate with a fixed machine device transceiver (200) using one or more transmission parameters; and
a control module (14) operable to store information related to the fixed machine device transceiver (200), said information comprising information related to an identification of the fixed machine device transceiver (200) and information related to one or more transmission parameters individual for the machine-to-machine fixed machine device transceiver (200).

2. The apparatus (10) according to claim 1, wherein the information related to the fixed machine device transceiver (200) comprises information related to a location of the fixed machine device transceiver.

3. The apparatus (10) according to claim 2, wherein the information related to the location of the fixed machine device transceiver (200) comprises a spatial coordinate and/or wherein the information related to the identification of the fixed machine device transceiver (200) is biunique for the fixed machine device transceiver (200).

4. The apparatus (10) according to claim 2, wherein the control module (14) is operable to receive a fixed machine device signal using the transceiver module (12) from the fixed machine device transceiver (200), wherein the fixed machine device signal comprises the information related to the identification of the fixed machine device transceiver (200) and the information related to the location of the fixed machine device transceiver (200).

5. The apparatus (10) according to claim 2, wherein the control module (14) is operable to receive a fixed machine device signal using the transceiver module (12), wherein the fixed machine device signal comprises information related to the identification of the fixed machine device transceiver (200), and wherein the control module (14) is operable to obtain the information related to the location of the fixed machine device transceiver (200) from a user of the fixed machine device transceiver (200).

6. The apparatus (10) according to claim 1, wherein the control module (14) is further operable to communicate a request signal to the fixed machine device transceiver (200) using the transceiver module (12) and the one or more transmission parameters, and/or wherein the one or more transmission parameters comprise at least one of a beamforming weight, a modulation scheme or a coding scheme, and/or wherein the information related to the identification corresponds to an identification in a random access preamble.

7. The apparatus (10) according to claim 1, wherein the control module (14) is operable to receive a fixed machine device signal from the fixed machine device transceiver (200) using the transceiver module (12), wherein the control module (14) is further operable to receive information related to the fixed machine device signal from another base station transceiver (150), and wherein the control module (14) is operable to combine the fixed machine device signal and the information related to the fixed machine device signal to obtain an improved fixed machine device signal.

8. The apparatus (10) of claim 1, wherein the control module (14) is operable to:
read out the information related to the fixed machine device transceiver (200) from a data storage module (16),
transmit a request signal to the fixed machine device transceiver (200) using the transceiver module (12) and using the information related to the one or more transmission parameters,
receive a fixed machine device signal from the fixed machine device transceiver (200), wherein the information related to the fixed machine device transceiver (200) comprises an identification tag assigned to the fixed machine device transceiver (200) and a spatial coordinate of the fixed machine device transceiver (200),
locate the fixed machine device transceiver (200) based on the spatial coordinate and store information related to the location in a look-up table,
receive an alarm message from the fixed machine device transceiver (200), and
determine the location of the fixed machine device transceiver (200) from the look-up table.

9. An apparatus (20) for a Machine-to-Machine, M2M, fixed machine device transceiver (200) communicating with a base station transceiver (100) in a mobile communication system (300), comprising
a transceiver module (22) operable to communicate with a base station transceiver (100) using one or more transmission parameters; and
a control module (24) operable to
store information related to the one or more transmission parameters, and transmit a random access message to the base station transceiver (100) using the transceiver module (22) and the information related to the transmission parameters.

10. The apparatus (20) according to claim 9, wherein the information related to the one or more transmission parameters comprises a beamforming parameter, a diversity combining parameter, or an amplification factor, and/or wherein the random access message comprises information related to an identification of the fixed machine device transceiver (200) as a fixed machine device transceiver (200).

11. The apparatus (20) according to claim 9, wherein the fixed machine device signal further comprises information related to a location of the fixed machine device transceiver (200) and/or wherein the information related to the identification of the fixed machine device transceiver (200) is biunique.

12. The apparatus (20) according to claim 9, wherein the control module (24) is further operable to measure a physical quantity and to transmit the fixed machine device signal to the base station transceiver (100) using the transceiver module (22) if the physical quantity exceeds a predefined threshold, and/or wherein the random access message comprises information related to the physical quantity.

13. A method for a base station transceiver (100) of a mobile communication system (300), said method comprising:
communicating (32) with a fixed machine device transceiver (200) using one or more transmission parameters; and
storing (34) information related to the fixed machine device transceiver (200), said information comprising information related to an identification of the fixed machine device transceiver (200) and information related to the one or more transmission parameters individual for the machine-to-machine, M2M, fixed machine device transceiver (200).

14. A method for a machine-to-machine, M2M, fixed machine device transceiver (200) of a mobile communication system (300), said method comprising:
communicating (42) with a base station transceiver (100) using one or more transmission parameters;
storing (44) information related to the one or more transmission parameters; and
transmitting (46) a random access message to the base station transceiver (100) using the information related to the transmission parameters.

15. A computer program having a program code for performing the method of one of claims 13 or 14, when the computer program is executed on a computer, processor, or a programmable hardware component.
